# EUROPEAN PATENT SPECIFICATION

(11) **EP 4 136 344 B1**
(45) Date of publication and mention of the grant of the patent: **13.12.2023**
(21) Application number: 21721399.0
(22) Date of filing: 06.04.2021
(51) Int. Cl.: F03D 13/10, F03D 13/40, F03D 80/50, B66C 1/10

(54) **LIFTING DEVICE AND METHOD FOR LIFTING A WIND TURBINE BLADE**
HEBEVORRICHTUNG UND VERFAHREN ZUM HEBEN EINES WINDTURBINENROTORBLATTS
DISPOSITIF DE LEVAGE ET PROCÉDÉ DE LEVAGE D'UNE PALE D'ÉOLIENNE

(30) Priority: 16.04.2020 EP 20382304
(43) Date of publication of application: 22.02.2023
(73) Proprietor: Siemens Gamesa Renewable Energy Innovation & Technology S.L., 31621 Sarriguren (Navarra) (ES)
(72) Inventor: GAMINDE LARRETA, Beinat, 48360 Mundaka (ES)
(74) Representative: SGRE-Association
(86) International application number: PCT/EP2021/058873
(87) International publication number: WO 2021/209279

(56) References cited:
- WO-A1-2014/076824
- WO-A1-2019/120413
- US-A1- 2013 334 378

## Description

The invention relates to a lifting device and a method for lifting a wind turbine blade.

The development of new wind turbines has resulted in larger and more powerful ones. Large wind turbines allow installing more power in one and the same site and reduce the visual impact of a farm formed by several wind turbines.

Wind turbines comprise a fixed tower which raises a nacelle bearing an electric generator connected to a rotor by mechanical means above the ground. The rotor is formed by a hub that attaches a plurality of blades which are bolted to studs of the hub bearings and are responsible for converting kinetic energy of the wind into rotational movement of the rotor.

The increase in generated power is directly related to the increase in the dimensions of the rotor of the wind turbine, and accordingly the increase in the length of the wind turbine blades. The blades are the most critical element of the wind turbine and for this reason they are subject to preventive and corrective inspections for which it is usually necessary to disassemble the blades from the hub and lower them to the ground to subsequently lift and reassemble them in the hub once maintenance tasks have been performed.

In some cases, devices comprised in the generator itself are used for lifting and lowering blades, as disclosed for example in ES 25569971 A1. Therein, a method and device for blade replacement in wind turbines is disclosed, which consists of two elements, one upper element and another lower element that work together to lift and lower the wind turbine blade. The upper i.e., "top", element of the device consists of elements bolted to the wind turbine bearing and blade fastening means, whereas the lower, i.e., "ground", element consists of a structure that surrounds the wind turbine tower and has at least two winches and two deviation pulleys to connect cables between the "top" element and the "ground" element of the device.

In other cases, maintenance operators use large cranes which allow handling large and heavy rotors, and they use a device which is associated with the blade and also with the crane. The device is lifted or lowered by means of actuating the crane, which in turn causes the lifting or lowering of the blade associated therewith. EP 2952733 A1, for example, discloses a lifting device for lifting wind turbine blades having a specific length, comprising a chassis with at least one coupling for supporting lifting means and with means for housing the blade.

EP 3312417 A1 discloses a wind turbine blades lifting device and associated methods. The wind turbine blades lifting device comprises a pneumatic chamber surrounding the wind turbine blade and being inflatable so as to retain the blade.

A further lifting device for a wind turbine blade is disclosed in WO 2019/120413 A1.

It is an object of the invention to provide a simple and low-cost lifting device and a method for lifting a wind turbine blade being very reliable in the process of lifting the wind turbine blade and in the process of releasing it from the lifting device.

This object is solved by the subject-matter of the claims. In particular, the object is solved by a lifting device according to claim 1 and a method for lifting a wind turbine blade according to claim 15. Further details of the invention unfold from the other claims as well as the description and the drawings. Thereby, the features and details described in connection with the lifting device of the invention apply in connection with the method for lifting a wind turbine blade of the invention, so that regarding the disclosure of the individual aspects of the invention it is or can be referred to one another.

According to a first aspect of the invention, the object is solved by a lifting device for lifting a wind turbine blade of a wind turbine, the lifting device defining a hollow closed space with a geometry suitable for surrounding the wind turbine blade inside of a support structure and in between retaining units of the lifting device, the support structure being made from a rigid material and the retaining units being attached to the support structure, wherein
the retaining units are facing each other with a portion of the hollow closed space formed in between them and the retaining units are configured to retain a portion of the wind turbine blade in between the retaining units when the wind turbine blade is guided into the hollow closed space and the lifting device is moved along the wind turbine blade guided in the hollow closed space in a first blade direction being a longitudinal direction of the wind turbine blade from tip to root and of increasing outer dimensions, such that the portion of the wind turbine blade is immobilized when it gets retained in between the retaining units due to its increased outer dimensions and with its weight applied as load on the retaining units, and
the retaining units are configured movable with respect to the support structure in the first blade direction and the retaining units are configured to release the retained portion of the wind turbine blade from the retaining units by passively moving with the wind turbine blade in the first blade direction when the lifting device is moved in a second blade direction being opposite to the first blade direction and the load from the weight of the wind turbine blade applied on the retaining units is removed.

Accordingly, the lifting device of the invention allows for both, fast, reliable and easy retainment of the wind turbine blade and release of the wind turbine blade. The process of releasing the wind turbine blade from its retained positioned between the retaining units is particularly easy and reliable compared to when the retaining units would not be movable in the first blade direction, because otherwise the wind turbine blade would firmly attach to the retaining units and it would be difficult to release them from the wind turbine blade. However, due to the retaining units being passively movable together with the wind turbine blade in the first blade direction, the process of releasing of the wind turbine blade is performed with ease. This releasing process is simply initiated by releasing the weight of the wind turbine blade from the retaining units und moving the lifting device in the second blade direction, that is, lowering the lifting device from the wind turbine blade when the wind turbine blade is attached to the hub, for example. Because the retaining units operate their movement passively, i.e. only by means of the load of the wind turbine blade, which even though the wind turbine blade is pulled in the first blade direction still firmly attaches to the retaining units, moving or pulling them in the first blade direction when it is moved in the first blade direction, actuators are avoided. In other words, the passive movement of the retaining units is achieved when the lifting device, i.e. the retaining units, do not carry the weight of the wind turbine blade anymore, i.e. it is attached to the hub of the wind turbine, such that it is released from the retaining units and the retaining units are moved together with the wind turbine blade in the first blade direction. At some point along the first blade direction, the retaining units will not be attached to the wind turbine blade anymore and thereby release it. Compared to an active movement by means of actuators the lifting device is designed much simpler and thereby is easier to operate, more reliable and cheaper to manufacture.

However, although the movement of the retaining units is passive, additional actuators may be provided for supporting this movement. Such a movement may be both. Passive in that it does need any actuator to be triggered. And active by means of the actuators.

In particular, the retaining units may be configured to move in opposing directions along their movement in the first blade direction. In other words, the retaining units may be configured to widen the portion of the hollow closed space defined in between them. Thereby, the portion of the hollow closed space is widened transitioning from the retained position of the wind turbine blade to its release such that it may be comfortably released.

It may be preferred, that at least one of the retaining units is configured movable with respect to the support structure in the first blade direction by means of a first wedge having a first inclined surface and a second wedge having a second inclined surface, wherein the first wedge is, in particular fixedly, attached to the support structure, the second wedge is configured to retain the portion of the wind turbine blade, and the second inclined surface is configured to move in the first blade direction by sliding on the first inclined surface. This solution having the two wedges is particularly simple, reliable and low-cost.

Also, it may be preferred, that at least one of the retaining units comprises a locking unit configured to disable the second wedge from sliding on the first wedge when the wind turbine blade is lifted into a horizontal position. In other words, the at least one of the retaining units may comprise a locking unit configured to disable the second wedge from sliding on the first wedge when the lifting device is turned from an upright position to a lying position. In the upright position, the lifting device is able to receive the wind turbine blade being arranged in the vertical position, whereas in the lying position of the lifting device, the lifting device retains the wind turbine blade in its horizontal position. The horizontal position is a position in which the wind turbine blade is parallel or substantially parallel to the ground. Thereby, it is prevented that the wind turbine blade is released from the lifting device in the horizontal position due to not or only partially exerting its weight as load on the retaining units.

Different active and passive locking options can be implemented. However, it may be preferred, that a locking pin of the locking unit is attached to the first wedge or the second wedge and guided in a groove or slot of a locking plate of the locking unit, wherein the groove or slot is configured such that the locking pin may be guided within the groove or slot so that second wedge is able to slide on the first wedge when the wind turbine blade is in a vertical position and the locking pin may not be guided within the groove or slot so that second wedge is disabled from sliding on the first wedge when the wind turbine blade is in the horizontal position (or in other words the lifting device is in the lying position). The vertical position of the wind turbine blade is a position in which it is oriented vertically or substantially vertically to the ground. For this purpose, the groove or slot in the locking plate may have an L-form or substantially an L-form. Thereby, the locking unit is provided with particularly easy means and is very reliable in its operation.

Further, alternatively or additionally, it may be preferred, that at least one of the retaining units is configured movable with respect to the support structure in the first blade direction by means of an articulated arm, wherein the articulated arm is hinged to the support structure by means of at least one hinge and is configured to retain the portion of the wind turbine blade and to move in the first blade direction by rotation about the at least one hinge. In particular, the articulated arm may be hinged to the support structure by two or more hinges.

Moreover, it may be preferred, that the retaining units are attached to the support structure at a main spar portion of the hollow closed space. The main spar portion is configured to contain the main spar of the wind turbine blade when the portion of the wind turbine blade is retained in between the retaining units. Thereby, it is ensured that the pressure from retaining the wind turbine blade in between the retaining units is exerted onto the main spar being the most rigid and stable part of the wind turbine blade and therefore being able to take the pressure loads from the retaining units. Thus, it is prevented that the wind turbine blade takes damage due to the pressure from retaining it in between the retaining units.

Further, it may be preferred, that the lifting device comprises at least one guiding unit attached to the support structure, wherein the hollow closed space is defined inside of the support structure and in between the retaining units and the at least one guiding unit. The at least one guiding unit can guide the lifting device along the wind turbine blade guided in the hollow closed space in the first blade direction so that the wind turbine blade is correctly positioned within the hollow closed space. The at least one guiding unit is in particular arranged such that it does not exert any pressure on the wind turbine blade. For example, the at least one guiding unit may be made from or comprise an elastic material, in particular a rubber material. Thereby, the at least one guiding unit only acts for guiding the wind turbine blade but cannot damage the wind turbine blade when moving the lifting device along the wind turbine blade.

Therein, it may be preferred, that the at least one guiding unit is attached to the support structure at a trailing edge portion of the hollow closed space. The trailing edge portion is configured to contain the trailing edge of the wind turbine blade when the lifting device is moved along the wind turbine blade guided in the hollow closed space in the first blade direction. Thus, the retaining units may act as guides at the leading edge or main spar portion of the wind turbine blade. And the at least one guiding unit may guide the wind turbine blade at its trailing edge.

Therein, it may further be preferred, that two guiding units are attached to the support structure, wherein the two guiding units are located on opposite longitudinal sides of the support structure, and/or the two guiding units are displaced from one another in the width direction of the wind turbine blade, which in particular may be a longitudinal direction of the lifting device. Thereby, the guiding units may guide the wind turbine blade or the lifting device from opposite sides and/or along the width of the wind turbine blade to achieve better guiding.

Further, therein, it may be preferred, that the at least one guiding unit is reversibly attached to the support structure and the support structure comprises multiple attachment positions for the at least one guiding unit. Thereby, the same lifting device may be used for different wind turbine blade geometries and sizes. It is simply possible to adjust the attachment position of the at least one guiding unit according to the geometry and size of the wind turbine blade to be lifted.

Moreover, therein, it may be preferred, that the at least one guiding unit comprises multiple guiding pads reversibly stacked on top of one another. The guiding pads may be made from an elastic material such as a rubber material, for example. Thereby, the same lifting device may be used for different wind turbine blade geometries and sizes. It is simply possible to adjust the number of guiding pads stacked on top of one another according to the geometry and size of the wind turbine blade to be lifted.

Also, it may be preferred, that an eyelet is attached to the support structure at each of two opposite short sides of the support structure. The lifting device together with the wind turbine blade can thereby be easily lifted in a balanced manner by means of a crane and ropes attached to the eyelets.

Further, it may be preferred, that multiple wheels are attached to the support structure at a longitudinal side of the support structure. The lifting device may be easily transported by means of the multiple wheels on the ground and to the site of its operation.

Moreover, it may be preferred, that at least one protective roller is attached to the support structure, wherein the protective roller is configured to roll on the outer surface of the wind turbine blade when the wind turbine blade is guided into the hollow closed space. In particular, the at least one protective roller may be attached to a short side of the support structure, in particular the short side next to a leading edge portion of the hollow closed space, i.e. the leading edge of the wind turbine blade. Thereby possibly damaging contact between the support structure and the wind turbine blade are avoided when initially inserting the tip of the wind turbine blade into the hollow closed space.

According to a second aspect of the invention, the object is solved by a method for lifting a wind turbine blade by means of a lifting device according to the first aspect of the invention, wherein first the wind turbine blade is guided into the hollow closed space and the lifting device is moved along the wind turbine blade guided in the hollow closed space in the first blade direction, such that the portion of the wind turbine blade is immobilized when it gets retained in between the retaining units due to its increased outer dimensions and with its weight applied as load on the retaining units, and second the lifting device is moved in the second blade direction and the load from the weight of the wind turbine blade applied on the retaining units is removed, releasing the retained portion of the wind turbine blade from the retaining units by moving them in the first blade direction.

The lifting device may be utilized as a first lifting point at or near the tip of the wind turbine blade. A second lifting point may be provided at or near the root of the wind turbine blade by means of a further device. This further device may have a ring shape attached to the root of the wind turbine blade, for example. The first and second lifting point may be lifted by a crane attached to the lifting device and the further device.

Further advantages, features and details of the invention unfold from the following description, in which by reference to drawings FIGURES 1 to 12 embodiments of the present invention are described in detail.

In the drawings, there is schematically shown:
- FIG. 1: a side perspective view on a lifting device according to a first embodiment of the invention,
- FIG. 2: a sectional cut through the lifting device of FIG. 1 with its retaining units in a retracted position,
- FIG. 3: the sectional cut of FIG. 2 with the retaining units in an expanded position,
- FIG. 4: a schematic representation of FIG. 2,
- FIG. 5: a schematic representation of FIG. 3,
- FIG. 6: a schematic representation of retaining units of a lifting device according to a second embodiment of the invention,
- FIG. 7: a side perspective view on the lifting device of FIG. 1 retaining and lifting a first wind turbine blade,
- FIG. 8: a top view on the lifting device of FIG. 7 retaining and lifting the first wind turbine blade,
- FIG. 9: a top view on the lifting device of FIG. 1 retaining and lifting a second wind turbine blade,
- FIG. 10: a top view on the lifting device of FIG. 1 retaining and lifting a third wind turbine blade,
- FIG. 11: a further side perspective view on the lifting device of FIG. 1 in an open position of a locking unit thereof, and
- FIG. 12: the perspective view on the lifting device of FIG. 11 in a locked position of the locking unit.

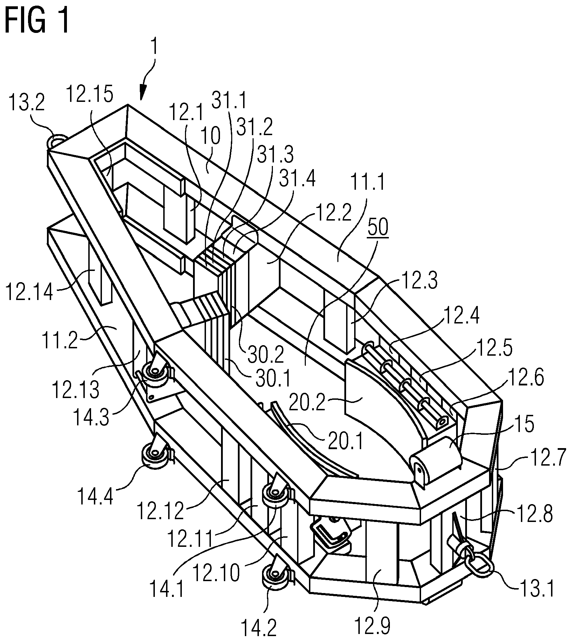

Same objects in the FIGURES 1 to 12 are denominated with the same reference number. If there is more than one object of the same kind in one of the figures, the objects are numbered in ascending order with the ascending number of the object being separated from its reference number by a dot. The specific dimensions of features and parts in the figures are exemplary and may be enlarged for ease of reference only.

FIGURE 1 shows a side perspective view on a lifting device 1 according to a first embodiment of the invention.

The lifting device 1 comprises a support structure 10 consisting of rigid material, for example a metal or metal alloy such as steal, and thereby being relatively stiff. In this first embodiment of the invention, the support structure 10 is designed as a frame structure having multiple rods or bars out of which it is assembled.

In this first embodiment, the support structure 10 comprises a first frame 11.1 and as second frame 11.2, each having a polygonal shape with eight sides and eight vertices. The first frame 11.1 and the second frame 11.2 are arranged parallel to one another and attached to one another by means of multiple beams 12.1, 12.2, 12.3, 12.4, 12.5, 12.6, 12.7, 12.8, 12.9, 12.10, 12.11, 12.12, 12.13, 12.14, 12.15. The first frame 11.1 and the second frame 11.2 define a hollow closed space 50 with a geometry suitable for surrounding the wind turbine blade 100 inside of the support structure 10.

On a longitudinal side of the support structure 10 facing away from the hollow closed space 50, each of the first frame 11.1 and the second frame 11.2 is provided with two wheels 14.1, 14.2, 14.3, 14.4 for enabling ground transportation of the lifting device 1. Further, eyelets 13.1, 13.2 in form of eyelet bolts are attached to the beams 12.8, 12.14 located at opposing short sides of the support structure 10 facing away from the hollow closed space 50.

Further defining the hollow closed space 50 are two retaining units 20.1, 20.2 and two guiding units 30.1, 30.2. The retaining units 20.1, 20.2 are arranged facing each other and respectively attached to multiple beams 12, in particular the beams 12.4, 12.5, 12.6, 12.10, 12.11, 12.12. The guiding units 30.1, 30.2 are located on opposite longitudinal sides of the support structure 10. Further, the guiding units 30.1, 30.2 are displaced from one another in the width direction of the support structure 10. The guiding units 30.1, 30.2 comprise multiple guiding pads 31 reversibly stacked on top of one another. The guiding pads 31.1, 31.2, 31.3, 13.4 of the guiding unit 30.2 are exemplary denominated. The function of the retaining units 20.1, 20.2 and the guiding units 30.1, 30.2 will be explained later with reference to the following drawings.

Moreover, the lifting device 1 comprises a protective roller 15 attached to a short side of the support structure 10, in particular the first frame 11.1. The first frame 11.1 is the one of the two frames 11.1, 11.2 facing a wind turbine blade 100 when it is inserted into the hollow closed space 50. Thereby, the protective roller 15 rolls on the outer surface of the wind turbine blade 100 to be guided through the hollow closed space 50 before the wind turbine blade 100 can touch the support structure 10 at its short side near the retaining units 20.1, 20.2, thereby preventing the wind turbine blade 100 from being damaged.

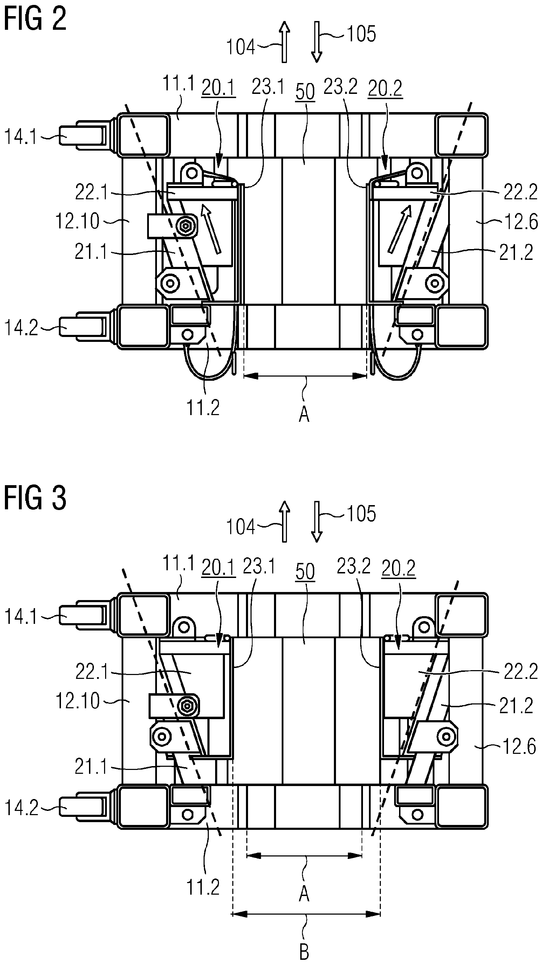

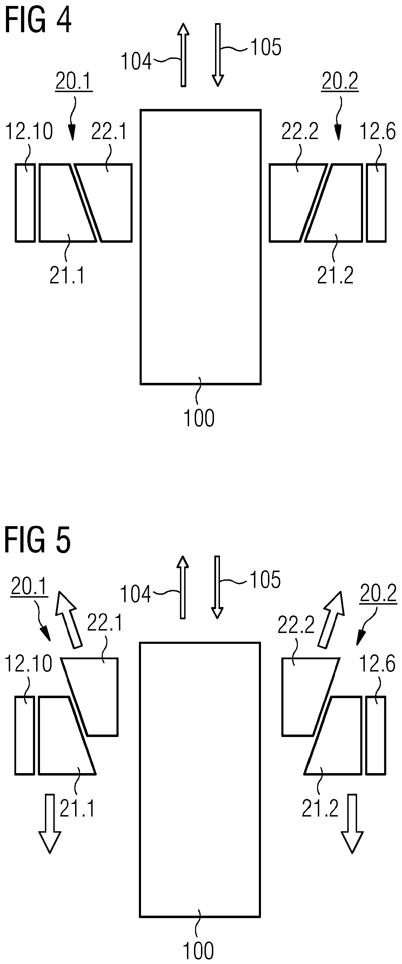

FIGURE 2 shows a sectional cut through the lifting device 1 of FIG. 1 at the position of its retaining units 20.1, 20.2. In FIGURE 2, the retaining units 20.1, 20.2 are shown in a retracted position, in which they are retaining a wind turbine blade 100. The wind turbine blade 100 (see FIGS. 4, 5 and 7) is not shown in FIGURE 2 but it will fit in between the gap A between the retaining units 20.1, 20.2 so as to be retained in between them.

Each of the retaining units 20.1, 20.2 comprises a first wedge 21.1, 21.2 having a first inclined surface and a second wedge 22.1, 22.2 having a second inclined surface. The second wedges 22.1, 22.2 are slidingly supported with their second inclined surfaces on the first inclined surfaces of the first wedges 21.1, 21.2. Thereby, the second wedges 22.1, 22.2 may slide up along the first wedges 21.1, 21.2 into the first blade direction 104 and down in the opposite second blade direction 105. The second wedges 22.1, 22.2 are facing each other. A contacting material 23.1, 23.2, such as a rubber, is attached to the second wedges 22.1, 22.2 for grasping the wind turbine blade 100 with ease and without damage. The wind turbine blade 100 in the gap A is retained by the second wedges 22.1, 22.2 of the retaining units 20.1, 20.2 due to the load applied onto the second wedges 22.1, 22.2 by means of the weight of the wind turbine blade 100. This disables the second wedges 22.1, 22.2 from moving in the first blade direction 104 by means of sliding on the first wedges 21.1, 21.2 but rather forces them in the second blade direction 105 preventing them from releasing the retained wind turbine blade 100. The inclined surfaces are arranged such that the second wedges 22.1, 22.2 move outwards of the hollow closed space 50 defined in between, thereby making it possible to widen the gap A formed in between them and to release the wind turbine blade 100. In this position, the wind turbine blade 100 is retained in a vertical position inside of the hollow closed space 50.

FIGURE 3 shows the sectional cut of FIGURE 2 with the retaining units 20.1, 20.2 in an expanded position, i.e. the second wedges 22.1, 22.2 moved along the first inclined surfaces in the first blade direction 104 due to the weight of the wind turbine blade 100 having been removed from the retaining units 20.1, 20.2 but the wind turbine blade 100 still being attached to the second wedges 22.1, 22.2 such that they are pulled out in the first blade direction 104 together with the wind turbine blade 100 by means of sliding on the first wedges 21.1, 21.2. The previous gap A between the second wedges 22.1, 22.2 has thereby been widened due to the inclined surfaces of the wedges 21.1, 21.2, 22.1, 22.2, such that now the greater gap B is formed between the second wedges 22.1, 22.2 enabling the wind turbine blade 100 from being release in the first blade direction 104. By means of this passive moving operation of the second wedges 22.1, 22.2, the wind turbine blade 100 is released from the lifting device 1 with ease.

FIGURE 4 shows a schematic representation of FIGURE 2. Here, the wind turbine blade 100 is arranged in a vertical position with respect to the ground such that its weight is loaded on the second wedges 22.1, 22.2. Thereby, the second wedges 22.1, 22.2 press in the first direction 104 on the first wedges 21.1, 21.2 and are in the retracted position. The second wedges 22.1, 22.2 cannot move in the first blade direction 104 due to the weight of the wind turbine blade 100. Thereby, the wind turbine blade 100 is safely retained in the lifting device 1 with the wind turbine blade 100 applying its load onto the second wedges 22.1, 22.2.

FIGURE 5 shows a schematic representation of FIGURE 4. Here, the wind turbine blade 100 is released from the lifting device 1 by moving the lifting device 1 in the second blade direction 105 while the wind turbine blade 100 is fixed to the hub of its wind turbine. As a result, the second wedges 22.1, 22.2 slide up against the first wedges 21.1, 21.2 in the first blade direction 104 and easily release the wind turbine blade 100 preventing it from being too firmly attached to the lifting device 1 or being stuck.

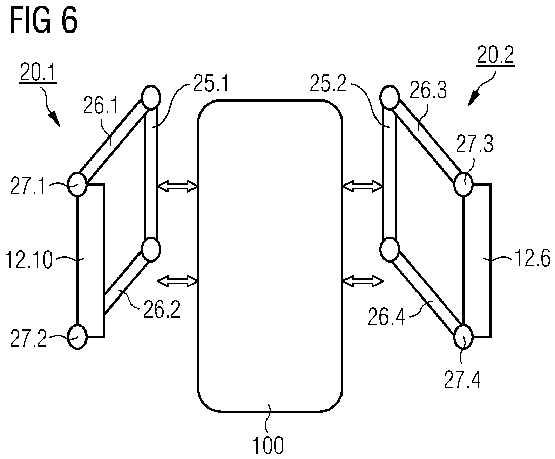

FIGURE 6 shows a schematic representation of retaining units 20.1, 20.2 of a lifting device 1 according to a second embodiment of the invention. Here, the retaining units 20.1, 20.2 are formed by means of articulated arms 25.1, 25.2. The articulated arms 25.1, 25.2 are connected by means of joins 26.1, 26.2, 26.3, 26.4 via hinges 27.1, 27.2, 27.3, 27.4 to the beams 12.6, 12.10 of the support structure 10. When the wind turbine blade 100 is applying the load of its weight on the articulated arms 25.1, 25.2, the wind turbine blade 100 is safely retained in the lifting device 1. To easily release the wind turbine blade 100 from the lifting device 1, the articulated arms 25.1, 25.2 are rotated about their hinges 27.1, 27.2, 27.3, 27.4, when the lifting device is moved in the first blade direction 104 while the wind turbine blade 100 is fixed to the hub of its wind turbine.

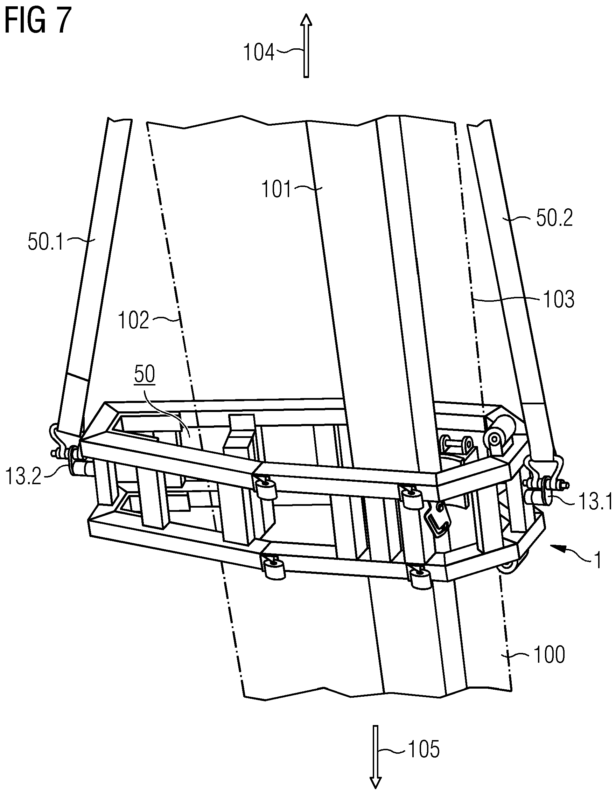

FIGURE 7 shows a side perspective view on the lifting device 1 of FIGURE 1 retaining and lifting a first wind turbine blade 100. Note that the shell of the first wind turbine blade 100, except for its main spar 101, is drawn transparent for allowing to see more parts of the lifting device 1, which would otherwise be covered by it. The eyelets 13.1, 13.2 of the lifting device 1 are for this purpose connected via ropes 50.1, 50.2 to a crane (not shown) lifting the lifting device 1 and the wind turbine blade 100 retained in the hollow closed space 50 therein.

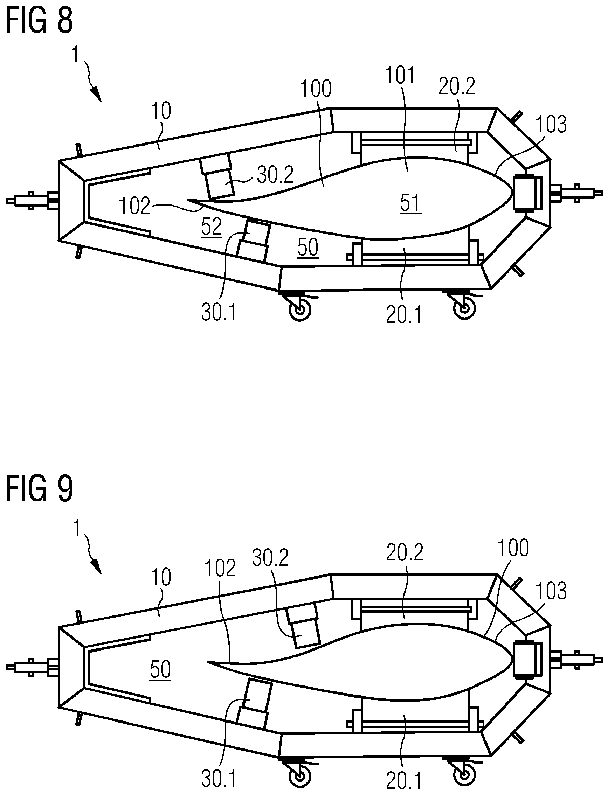

FIGURE 8 shows a top view on the lifting device 1 of FIGURE 7 retaining and lifting the first wind turbine blade 100. As can be seen from this perspective, the retaining units 20.1, 20.2 retain the wind turbine blade 100 at a main spar portion 51 in the hollow closed space 50. In other words, the retaining units 20.1, 20.2 retain the wind turbine blade 100 at a position where it has its main spar 101. Further, the guiding units 30.1, 30.2 are arranged in a trailing edge portion 52 of the hollow closed space 50 to guide the lifting device 1 along the trailing edge 102 of the wind turbine blade 100.

FIGURE 9 shows a top view on the lifting device 1 of FIGURE 1 retaining and lifting a second wind turbine blade 100. This second wind turbine blade 100 of FIGURE 9 is different from the wind turbine blade 100 of FIGURES 7 and 8 in that it has a different geometry. For this purpose, to properly guide the lifting device 1 along the wind turbine blade 100, the guiding units 30.1, 30.2 have been modified. In particular, the guiding unit 30.1 is now larger, i.e. further guiding pads 31 have been stacked on top of it. And further, the guiding unit 30.2 has been relocated inside of the hollow closed space 50, in particular attached to a different beam 12. The configuration of the guiding units 30.1, 30.2 shown in FIGURE 9 has thereby been adapted to optimally guide the trailing edge 102 wind turbine blade 100.

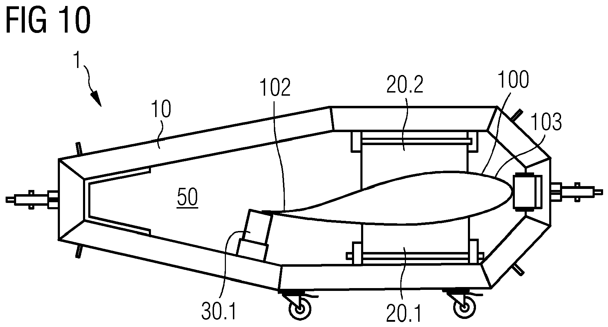

FIGURE 10 shows a top view on the lifting device of FIGURE 1 retaining and lifting a third wind turbine blade 100. This third turbine blade 100 of FIGURE 10 is different from the wind turbine blade 100 of FIGURES 7 and 8 and the wind turbine blade 100 of FIGURE 9 in that it not only has different geometry but also significantly different dimensions, in particular is smaller. For this purpose, to properly guide the lifting device 1 along the wind turbine blade 100, only one guiding unit 30 is necessary arranged at the end of trailing edge 102, whereas the further guiding unit 30 has been omitted.

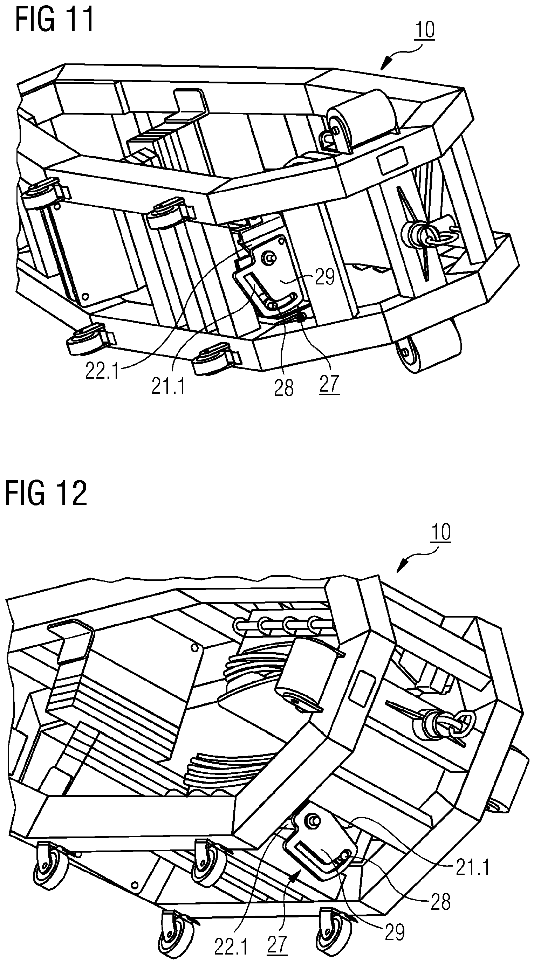

FIGURE 11 shows a further side perspective view on the lifting device 1 of FIGURE 1 in an open position of a locking unit 27 thereof. The lifting device 1 is oriented in an upright position such that the wind turbine blade 100 may be inserted with a vertical orientation. The locking unit 27 is configured to disable the second wedge 22.1 from sliding on the first wedge 21.1 when the wind turbine blade 100 is lifted into a horizontal position. For this purpose, the locking unit 27 comprises a locking pin 28 attached to the first wedge 21.1. Further, the locking unit 27 comprises a locking plate 29 comprising a slot into which the locking pin 28 is inserted and in which it is guided. The locking plate 29 is attached to the wedge not having the locking pin 28, in this case the second wedge 22.1. The slot has a substantially L-shaped form.

In the open position of the locking unit 27 shown in FIGURE 11, the locking pin 28 may vertically slide along a vertical part of the slot of the locking plate 29 and thereby the second wedge 22.1 may slide along the first wedge 21.1. The vertical part runs vertically in the locking plate 29 with respect to the ground in this orientation of the lifting device 1. However, this only works when the lifting device 1 is oriented in the shown orientation, i.e. in an upright position such that the wind turbine blade 100 inserted into its hollow closed space 50 is oriented vertically towards the ground.

When the lifting device 1, however, is oriented in the orientation as shown in FIGURE 12, i.e. in a lying position with the wind turbine blade 100 inserted into its hollow closed space 50 being oriented horizontally to the ground, the locking pin 27 slides into a horizontal part of the slot. The horizontal part of the slot is arranged horizontally in the locking plate 29. Thereby, the locking pin 27 becomes locked in the slot and unable to be moved in the first blade direction 104. Thereby, the second wedge 22.1 is locked in its position and cannot slide on the first wedge 21.1. This prevents the wind turbine blade 100 from being unintentionally released from the lifting device 1 when the wind turbine blade 100 is oriented horizontally or substantially horizontally to the ground.

## Claims

1. Lifting device (1) for lifting a wind turbine blade (100) of a wind turbine, the lifting device (1) defining a hollow closed space (50) with a geometry suitable for surrounding the wind turbine blade (100) inside of a support structure (10) and in between retaining units (20) of the lifting device (1), the support structure (10) being made from a rigid material and the retaining units (20) being attached to the support structure (10), wherein
the retaining units (20) are facing each other with a portion of the hollow closed space (50) defined in between them, and
the retaining units (20) are configured to retain a portion of the wind turbine blade (100) in between the retaining units (20) when the wind turbine blade (100) is guided into the hollow closed space (50), and the lifting device (1) is moved along the wind turbine blade (100) guided in the hollow closed space (50) in a first blade direction (104) being a longitudinal direction of the wind turbine blade (100) from tip to root and of increasing outer dimensions, such that the portion of the wind turbine blade (100) is immobilized when it gets retained in between the retaining units (20) due to its increased outer dimensions and with its weight applied as load on the retaining units (20), and
wherein the retaining units (20) are configured movable with respect to the support structure (10) in the first blade direction (104) and to release the retained portion of the wind turbine blade (100) from the retaining units (20) by passively moving with the wind turbine blade (100) in the first blade direction (104) when the lifting device (1) is moved in a second blade direction (105) being opposite to the first blade direction (104) and the load from the weight of the wind turbine blade (100) applied on the retaining units (20) is removed.

2. Lifting device (1) according to claim 1, wherein at least one of the retaining units (20) is configured movable with respect to the support structure (10) in the first blade direction (104) by means of a first wedge (21) having a first inclined surface and a second wedge (22) having a second inclined surface, wherein the first wedge (21) is attached to the support structure (10), the second wedge (22) is configured to retain the portion of the wind turbine blade (100), and the second inclined surface is configured to move in the first blade direction (104) by sliding on the first inclined surface.

3. Lifting device (1) according to claim 2, wherein at least one of the retaining units (20) comprises a locking unit (27) configured to disable the second wedge (22) from sliding on the first wedge (21) when the wind turbine blade (100) is lifted into a horizontal position.

4. Lifting device (1) according to claim 3, wherein a locking pin (28) of the locking unit (27) is attached to the first wedge (21) or the second wedge (22) and guided in a groove or slot of a locking plate (29) of the locking unit (27), wherein the groove or slot is configured such that the locking pin (28) may be guided within the groove or slot so that second wedge (22) is able to slide on the first wedge (21) when the wind turbine blade (100) is in a vertical position and the locking pin (28) may not be guided within the groove or slot so that second wedge (22) is disabled from sliding on the first wedge (21) when the wind turbine blade (100) is in the horizontal position.

5. Lifting device (1) according to any of the previous claims, wherein at least one of the retaining units (20) is configured movable with respect to the support structure (10) in the first blade direction by means of an articulated arm (25), wherein the articulated arm (25) is hinged to the support structure (10) by means of at least one hinge (27) and is configured to retain the portion of the wind turbine blade (100) and to move in the first blade direction (104) by rotation about the at least one hinge (27).

6. Lifting device (1) according to any of the previous claims, wherein the retaining units (20) are attached to the support structure (10) at a main spar portion (51) of the hollow closed space (50).

7. Lifting device (1) according to any of the previous claims, wherein the lifting device (1) comprises at least one guiding unit (30) attached to the support structure (10), wherein the hollow closed space (50) is defined inside of the support structure (10) and in between the retaining units (20) and the at least one guiding unit (30) .

8. Lifting device (1) according to claim 7, wherein the at least one guiding unit (30) is attached to the support structure (10) at a trailing edge portion (52) of the hollow closed space (50).

9. Lifting device (1) according to claim 7 or 8, wherein two guiding units (30) are attached to the support structure (10), wherein
the two guiding units (30) are located on opposite longitudinal sides of the support structure (10), and/or
the two guiding units (30) are displaced from one another in the width direction of the wind turbine blade (100) .

10. Lifting device (1) according to any of claims 7 to 9, wherein the at least one guiding unit (30) is reversibly attached to the support structure (10) and the support structure (10) comprises multiple attachment positions for the at least one guiding unit (30).

11. Lifting device (1) according to any of claims 7 to 10, wherein the at least one guiding unit (30) comprises multiple guiding pads (31) reversibly stacked on top of one another.

12. Lifting device (1) according to any of the previous claims, wherein an eyelet (13) is attached to the support structure (10) at each of two opposite short sides of the support structure (10).

13. Lifting device (1) according to any of the previous claims, wherein multiple wheels (14) are attached to the support structure (10) at a longitudinal side of the support structure (10).

14. Lifting device (1) according to any of the previous claims, wherein at least one protective roller (15) is attached to the support structure (10), wherein the protective roller (15) is configured to roll on the outer surface of the wind turbine blade (100) when the wind turbine blade (100) is guided into the hollow closed space (50) .

15. Method for lifting a wind turbine blade (100) by means of a lifting device (1) according to any of the previous claims, wherein
first the wind turbine blade (100) is guided into the hollow closed space (50), and
the lifting device (1) is moved along the wind turbine blade (100) guided in the hollow closed space (50) in the first blade direction (104) such that the portion of the wind turbine blade (100) is immobilized when it gets retained in between the retaining units (20) due to its increased outer dimensions and with its weight applied as load on the retaining units (20), and
second the lifting device (1) is moved in the second blade direction (105) and the load from the weight of the wind turbine blade (100) applied on the retaining units (20) is removed, releasing the retained portion of the wind turbine blade (100) from the retaining units (20) by moving them in the first blade direction (104).

## Patentansprüche

1. Hebevorrichtung (1) zum Heben eines Windkraftanlagenrotorblatts (100) einer Windkraftanlage, wobei die Hebevorrichtung (1) einen hohlen geschlossenen Raum (50) mit einer zum Umgeben des Windkraftanlagenrotorblatts (100) innerhalb einer Trägerstruktur (10) und zwischen Halteeinheiten (20) der Hebevorrichtung (1) geeigneten Form definiert, wobei die Trägerstruktur (10) aus einem steifen Material gefertigt ist und die Halteeinheiten (20) an der Trägerstruktur (10) befestigt sind, wobei
die Halteeinheiten (20) einander zugewandt sind, wobei ein Abschnitt des hohlen geschlossenen Raums (50) dazwischen definiert ist, und
die Halteeinheiten (20) dazu ausgelegt sind, einen Abschnitt des Windkraftanlagenrotorblatts (100) zwischen den Halteeinheiten (20) zu halten, wenn das Windkraftanlagenrotorblatt (100) in den hohlen geschlossenen Raum (50) geführt wird und die Hebevorrichtung (1) entlang des in dem hohlen geschlossenen Raum (50) geführten Windkraftanlagenrotorblatts (100) in eine erste Rotorblattrichtung (104) bewegt wird, die eine Längsrichtung des Windkraftanlagenrotorblatts (100) von der Spitze zur Wurzel ist und zunehmende Außenabmessungen aufweist, sodass der Abschnitt des Windkraftanlagenrotorblatts (100) aufgrund seiner vergrößerten Außenabmessungen und seines auf die Halteeinheiten (20) als Last aufgebrachten Gewichts bewegungsunfähig ist, wenn er zwischen den Halteeinheiten (20) gehalten wird, und
wobei die Halteeinheiten (20) dazu ausgelegt sind, in Bezug zur Trägerstruktur (10) in die erste Rotorblattrichtung (104) beweglich zu sein und den gehaltenen Abschnitt des Windkraftanlagenrotorblatts (100) durch passives Bewegen mit dem Windkraftanlagenrotorblatt (100) in die erste Rotorblattrichtung (104), wenn die Hebevorrichtung (1) in eine der ersten Rotorblattrichtung (104) entgegengesetzte zweite Rotorblattrichtung (105) bewegt wird und die vom Gewicht des Windkraftanlagenrotorblatts (100) auf die Halteeinheiten (20) aufgebrachte Last entfernt wird, aus den Halteeinheiten (20) zu lösen.

2. Hebevorrichtung (1) nach Anspruch 1, wobei mindestens eine der Halteeinheiten (20) dazu ausgelegt ist, in Bezug zur Trägerstruktur (10) mittels eines ersten Keils (21) mit einer ersten geneigten Fläche und eines zweiten Keils (22) mit einer zweiten geneigten Fläche in die erste Rotorblattrichtung (104) beweglich zu sein, wobei der erste Keil (21) an der Trägerstruktur (10) befestigt ist, der zweite Keil (22) dazu ausgelegt ist, den Abschnitt des Windkraftanlagenrotorblatts (100) zu halten, und die zweite geneigte Fläche dazu ausgelegt ist, sich durch Verschieben auf der ersten geneigten Fläche in die erste Rotorblattrichtung (104) zu bewegen.

3. Hebevorrichtung (1) nach Anspruch 2, wobei mindestens eine der Halteeinheiten (20) eine Arretierungseinheit (27) umfasst, die dazu ausgelegt ist, den zweiten Keil (22) daran zu hindern, sich auf dem ersten Keil (21) zu verschieben, wenn das Windkraftanlagenrotorblatt (100) in eine horizontale Position gehoben ist.

4. Hebevorrichtung (1) nach Anspruch 3, wobei ein Sperrstift (28) der Arretierungseinheit (27) am ersten Keil (21) oder am zweiten Keil (22) befestigt ist und in einer Nut oder einem Schlitz eines Sicherungsblechs (29) der Arretierungseinheit (27) geführt wird, wobei die Nut oder der Schlitz derart ausgelegt ist, dass der Sperrstift (28) innerhalb der Nut oder des Schlitzes geführt werden kann, sodass sich der zweite Keil (22) auf dem ersten Keil (21) verschieben kann, wenn sich das Windkraftanlagenrotorblatt (100) in einer vertikalen Position befindet, und der Sperrstift (28) innerhalb der Nut oder des Schlitzes nicht geführt werden kann, sodass der zweiten Keil (22) daran gehindert wird, sich auf dem ersten Keil (21) zu verschieben, wenn sich das Windkraftanlagenrotorblatt (100) in der horizontalen Position befindet.

5. Hebevorrichtung (1) nach einem der vorstehenden Ansprüche, wobei mindestens eine der Halteeinheiten (20) dazu ausgelegt ist, mittels eines Gelenkarms (25) in Bezug zur Trägerstruktur (10) in die erste Rotorblattrichtung beweglich zu sein, wobei der Gelenkarm (25) mittels mindestens eines Scharniers (27) gelenkig an der Trägerstruktur (10) befestigt und dazu ausgelegt ist, den Abschnitt des Windkraftanlagenrotorblatts (100) zu halten und sich durch Drehung um das mindestens eine Scharnier (27) in die erste Rotorblattrichtung (104) zu bewegen.

6. Hebevorrichtung (1) nach einem der vorstehenden Ansprüche, wobei die Halteeinheiten (20) an einem Hauptholmabschnitt (51) des hohlen geschlossenen Raums (50) an der Trägerstruktur (10) befestigt sind.

7. Hebevorrichtung (1) nach einem der vorstehenden Ansprüche, wobei die Hebevorrichtung (1) mindestens eine Führungseinheit (30) umfasst, die an der Trägerstruktur (10) befestigt ist, wobei der hohle, geschlossene Raum (50) innerhalb der Trägerstruktur (10) und zwischen den Halteeinheiten (20) und der mindestens einen Führungseinheit (30) definiert ist.

8. Hebevorrichtung (1) nach Anspruch 7, wobei die mindestens eine Führungseinheit (30) an einem Hinterkantenabschnitt (52) des hohlen geschlossenen Raums (50) an der Trägerstruktur (10) befestigt ist.

9. Hebevorrichtung (1) nach Anspruch 7 oder 8, wobei zwei Führungseinheiten (30) an der Trägerstruktur (10) befestigt sind, wobei
die zwei Führungseinheiten (30) an entgegengesetzten Längsseiten der Trägerstruktur (10) angeordnet sind und/oder
die zwei Führungseinheiten (30) in Breitenrichtung des Windkraftanlagenrotorblatts (100) zueinander versetzt sind.

10. Hebevorrichtung (1) nach einem der Ansprüche 7 bis 9, wobei die mindestens eine Führungseinheit (30) umkehrbar an der Trägerstruktur (10) befestigt ist und die Trägerstruktur (10) mehrere Befestigungspositionen für die mindestens eine Führungseinheit (30) umfasst.

11. Hebevorrichtung (1) nach einem der Ansprüche 7 bis 10, wobei die mindestens eine Führungseinheit (30) mehrere Führungspolster (31) umfasst, die umkehrbar aufeinandergestapelt sind.

12. Hebevorrichtung (1) nach einem der vorstehenden Ansprüche, wobei eine Öse (13) an jeder der zwei entgegengesetzten kurzen Seiten der Trägerstruktur (10) an der Trägerstruktur (10) befestigt ist.

13. Hebevorrichtung (1) nach einem der vorstehenden Ansprüche, wobei mehrere Räder (14) an einer Längsseite der Trägerstruktur (10) an der Trägerstruktur (10) befestigt sind.

14. Hebevorrichtung (1) nach einem der vorstehenden Ansprüche, wobei mindestens eine Schutzrolle (15) an der Trägerstruktur (10) befestigt ist, wobei die Schutzrolle (15) dazu ausgelegt ist, auf der Außenfläche des Windkraftanlagenrotorblatts (100) zu rollen, wenn das Windkraftanlagenrotorblatt (100) in den hohlen geschlossenen Raum (50) geführt wird.

15. Verfahren zum Heben eines Windkraftanlagenrotorblatts (100) mittels einer Hebevorrichtung (1) nach einem der vorstehenden Ansprüche, wobei
als erstes das Windkraftanlagenrotorblatt (100) in den hohlen geschlossenen Raum (50) geführt wird und
die Hebevorrichtung (1) entlang des in dem hohlen geschlossenen Raum (50) geführten Windkraftanlagenrotorblatts (100) in die erste Rotorblattrichtung (104) bewegt wird, sodass der Abschnitt des Windkraftanlagenrotorblatts (100) aufgrund seiner vergrößerten Außenabmessungen und seines auf die Halteeinheiten (20) als Last aufgebrachten Gewichts bewegungsunfähig ist, wenn er zwischen den Halteeinheiten (20) gehalten wird, und
als zweites die Hebevorrichtung (1) in die zweite Rotorblattrichtung (105) bewegt wird und die vom Gewicht des Windkraftanlagenrotorblatts (100) auf die Halteeinheiten (20) aufgebrachte Last entfernt wird, wodurch der gehaltene Abschnitt des Windkraftanlagenrotorblatts (100) von den Halteeinheiten (20) gelöst wird, indem sie in die erste Rotorblattrichtung (104) bewegt werden.

## Revendications

1. Dispositif de levage (1) pour soulever une pale d'éolienne (100) d'une éolienne, le dispositif de levage (1) définissant un espace creux fermé (50) avec une géométrie adaptée pour entourer la pale d'éolienne (100) à l'intérieur d'une structure de support (10) et entre les unités de retenue (20) du dispositif de levage (1), la structure de support (10) étant réalisée à partir d'un matériau rigide et les unités de retenue (20) étant fixées à la structure de support (10), dans lequel
les unités de retenue (20) se font face avec une partie de l'espace creux fermé (50) définie entre elles, et
les unités de retenue (20) sont configurées pour retenir une partie de la pale d'éolienne (100) entre les unités de retenue (20) lorsque la pale d'éolienne (100) est guidée dans l'espace creux fermé (50) et le dispositif de levage (1) est déplacé le long de la pale d'éolienne (100) guidée dans l'espace creux fermé (50) dans une première direction de la pale (104) qui est une direction longitudinale de la pale d'éolienne (100) de la pointe au pied et de dimensions extérieures croissantes, de telle sorte que la partie de la pale d'éolienne (100) est immobilisée lorsqu'elle est retenue entre les unités de retenue (20) en raison de ses dimensions extérieures croissantes et de son poids appliqué comme charge sur les unités de retenue (20), et
dans lequel les unités de retenue (20) sont configurées mobiles par rapport à la structure de support (10) dans la première direction de la pale (104) et pour libérer la partie retenue de la pale d'éolienne (100) des unités de retenue (20) en se déplaçant de manière passive avec la pale d'éolienne (100) dans la première direction de la pale (104) lorsque le dispositif de levage (1) est déplacé dans une deuxième direction de la pale (105) opposée à la première direction de la pale (104) et la charge qui provient du poids de la pale d'éolienne (100) appliquée sur les unités de retenue (20) est retirée.

2. Dispositif de levage (1) selon la revendication 1, dans lequel au moins une des unités de retenue (20) est configurée mobile par rapport à la structure de support (10) dans la première direction de la pale (104) au moyen d'une première cale (21) ayant une première surface inclinée et une deuxième cale (22) ayant une deuxième surface inclinée, la première cale (21) étant fixée à la structure de support (10), la deuxième cale (22) étant configurée pour retenir la partie de la pale d'éolienne (100), et la deuxième surface inclinée étant configurée pour se déplacer dans la première direction de la pale (104) en glissant sur la première surface inclinée.

3. Dispositif de levage (1) selon la revendication 2, dans lequel au moins une des unités de retenue (20) comprend une unité de verrouillage (27) configurée pour empêcher la deuxième cale (22) de glisser sur la première cale (21) lorsque la pale d'éolienne (100) est soulevée en position horizontale.

4. Dispositif de levage (1) selon la revendication 3, dans lequel une broche de verrouillage (28) de l'unité de verrouillage (27) est fixée à la première cale (21) ou à la deuxième cale (22) et est guidée dans une rainure ou une fente d'une plaque de verrouillage (29) de l'unité de verrouillage (27), la rainure ou la fente étant configurée de telle sorte que la broche de verrouillage (28) puisse être guidée à l'intérieur de la rainure ou de la fente de sorte que la deuxième cale (22) puisse glisser sur la première cale (21) lorsque la pale d'éolienne (100) est dans une position verticale et la broche de verrouillage (28) ne peut pas être guidée à l'intérieur de la rainure ou de la fente de sorte que la deuxième cale (22) soit empêchée de glisser sur la première cale (21) lorsque la pale d'éolienne (100) est en position horizontale.

5. Dispositif de levage (1) selon l'une quelconque des revendications précédentes, dans lequel au moins une des unités de retenue (20) est configurée mobile par rapport à la structure de support (10) dans la première direction de la pale au moyen d'un bras articulé (25), le bras articulé (25) étant articulé sur la structure de support (10) au moyen d'au moins une charnière (27) et étant configuré pour retenir la partie de la pale d'éolienne (100) et pour se déplacer dans la première direction de la pale (104) par rotation autour de la au moins une charnière (27).

6. Dispositif de levage (1) selon l'une quelconque des revendications précédentes, dans lequel les unités de retenue (20) sont fixées à la structure de support (10) au niveau d'une partie de longeron principal (51) de l'espace creux fermé (50).

7. Dispositif de levage (1) selon l'une quelconque des revendications précédentes, dans lequel le dispositif de levage (1) comprend au moins une unité de guidage (30) fixée à la structure de support (10), dans lequel l'espace creux fermé (50) est défini à l'intérieur de la structure de support (10) et entre les unités de retenue (20) et la au moins une unité de guidage (30) .

8. Dispositif de levage (1) selon la revendication 7, dans lequel la au moins une unité de guidage (30) est fixée à la structure de support (10) au niveau d'une partie de bord de fuite (52) de l'espace creux fermé (50).

9. Dispositif de levage (1) selon la revendication 7 ou 8, dans lequel deux unités de guidage (30) sont fixées à la structure de support (10), dans lequel
les deux unités de guidage (30) sont situées sur des côtés longitudinaux opposés de la structure de support (10), et/ou
les deux unités de guidage (30) sont décalées l'une par rapport à l'autre dans le sens de la largeur de la pale d'éolienne (100).

10. Dispositif de levage (1) selon l'une quelconque des revendications 7 à 9, dans lequel la au moins une unité de guidage (30) est fixée de manière réversible à la structure de support (10) et la structure de support (10) comprend plusieurs positions de fixation pour la au moins une unité de guidage (30).

11. Dispositif de levage (1) selon l'une quelconque des revendications 7 à 10, dans lequel la au moins une unité de guidage (30) comprend plusieurs patins de guidage (31) empilés de manière réversible les uns sur les autres.

12. Dispositif de levage (1) selon l'une quelconque des revendications précédentes, dans lequel un œillet (13) est fixé à la structure de support (10) au niveau de chacun des deux petits côtés opposés de la structure de support (10).

13. Dispositif de levage (1) selon l'une quelconque des revendications précédentes, dans lequel plusieurs roues (14) sont fixées à la structure de support (10) sur un côté longitudinal de la structure de support (10).

14. Dispositif de levage (1) selon l'une quelconque des revendications précédentes, dans lequel au moins un rouleau de protection (15) est fixé à la structure de support (10), le rouleau de protection (15) étant configuré pour rouler sur la surface externe de la pale d'éolienne (100) lorsque la pale d'éolienne (100) est guidée dans l'espace creux fermé (50).

15. Procédé de levage d'une pale d'éolienne (100) au moyen d'un dispositif de levage (1) selon l'une quelconque des revendications précédentes, dans lequel
la pale d'éolienne (100) est d'abord guidée dans l'espace creux fermé (50), et
le dispositif de levage (1) est déplacé le long de la pale d'éolienne (100) guidée dans l'espace creux fermé (50) dans la première direction de la pale (104) de telle sorte que la partie de la pale d'éolienne (100) est immobilisée lorsqu'elle est retenue entre les unités de retenue (20) en raison de ses dimensions extérieures croissantes et de son poids appliqué comme charge sur l'unité de retenue (20) et
le dispositif de levage (1) est déplacé dans la deuxième direction de la pale (105) et la charge provenant du poids de la pale d'éolienne (100) appliquée sur les unités de retenue (20) est retirée, libérant la partie retenue de la pale d'éolienne (100) des unités de retenue (20) en les déplaçant dans la première direction de la pale (104).
